# EUROPÄISCHE PATENTSCHRIFT

(11) **EP 2 467 254 B1**
(45) Veröffentlichungstag und Bekanntmachung des Hinweises auf die Patenterteilung: **17.05.2017**
(21) Anmeldenummer: 10746998.3
(22) Anmeldetag: 29.07.2010
(51) Int. Cl.: E04C 2/34, B32B 3/12

(54) **LEICHTBAUPLATTE**
MULTILAYER LIGHT-WEIGHT CONSTRUCTION PANEL
PANNEAU DE CONSTRUCTION LÉGER MULTICOUCHE

(30) Priorität: 21.08.2009 DE 202009011402 U
(43) Veröffentlichungstag der Anmeldung: 27.06.2012
(73) Patentinhaber: Rehau AG & Co, 95111 Rehau (DE)
(72) Erfinder: HACKER, Matthias, 95194 Regnitzlosau (DE); KRÄMER, Uwe, 95111 Rehau (DE); AFFELDT, Jens-Uwe, 08258 Breitenfeld (DE)
(86) Internationale Anmeldenummer: PCT/EP2010/004640
(87) Internationale Veröffentlichungsnummer: WO 2011/020544

(56) Entgegenhaltungen:
- EP-A2- 1 698 738
- WO-A1-2005/010293
- DE-U1- 9 003 853
- DE-U1-202006 003 857

## Beschreibung

Die Erfindung betrifft eine Leichtbauplatte mit zumindest zwei Decklagen und zumindest eine zwischen den Decklagen angeordnete Kernlage, wobei eine Profilleiste an zumindest einer der Schmalseiten der Leichtbauplatte befestigt ist.

Aus der DE 19506158 A1 ist eine gattungsgemäße Leichtbauplatte bekannt, bei der ein Kern von zumindest zwei Platten an zwei seiner Seiten abgedeckt ist. Diese Leichtbauplatte weist an ihren Längsstirnseiten ein Halte- und Abschlussprofil auf, welches ein Basisteil mit einer Sicht- bzw. Anschlussfläche und einer dieser gegenüberliegende Abdeckfläche aufweist und mit einer Verankerungseinrichtung, die an der Abdeckfläche angeordnet ist und im Montagezustand in den Kern der Leichtbauplatte eingreift. Dieses Halte- und Abschlussprofil wird in die Längsstirnseiten der Leichtbauplatte eingepresst, wobei der Kern der Leichtbauplatte an dieser Stelle beschädigt ist und das Halte- und Abschlussprofil über den an der Verankerungseinrichtung angeordneten Klebstoff mit den Decklagen der Leichtbauplatte verklebt ist.

Bei diesem Halte- und Abschlussprofil ist es jedoch nachteilig, dass für jede Geometrie bzw. Raumform der Leichtbauplatte, insbesondere abhängig von der Dicke und vor allem der Toleranz der Decklagen separate Halte- und Abschlussprofile hergestellt werden müssen. Ein weiterer Nachteil bei dieser Leichtbauplatte wird darin gesehen, dass durch das Eindrücken der Verankerungseinrichtung in die Kernlage der Leichtbauplatte ein Aufspreizen bzw. Aufdehnen der Decklagen der Leichtbauplatte erfolgt, welches beispielsweise unterschiedlichen Toleranzen der Verankerungseinrichtung und unterschiedlichen Abständen der einzelnen Decklagen zugeordnet werden muss. Weiterhin nachteilig wird gesehen, dass diese Lösung zu einem möglichen Ablösen der Kernlage von einer oder beider Decklagen führt.

Eine weitere gattungsgemäße Leichtbauplatte ist aus der DE 20 2006 003 857 U1 bekannt. Diese Leichtbauplatte weist zwei Deckschichten und zumindest eine zwischen den Deckschichten angeordnete Kernschicht auf. An den Schmalseiten der Leichtbauplatte ist eine Stützleiste befestigbar und auf der Stützleiste eine weitere Deckleiste.

Die Stützleiste soll dabei als zumindest bereichsweise perforierte Stützleiste mit zumindest einer aus einer Vielzahl von Durchbrechungen bestehenden Perforation ausgebildet sein, die in eine in der Schmalseite der Leichtbauplatte eingebrachte Stützleistenaufnahmenut einsetzbar ist. Diese Stützleiste soll die beiden gegenüberliegenden Deckschichten adhäsiv verbindend abstützen und durch die Perforation der Stützleiste in Form von dieser durchdringenden Öffnungen soll gewährleistet sein, dass die ebenfalls adhäsiv auf diese aufzubringende Deckleiste optimal befestigbar ist.

Nachteilig bei dieser Leichtbauplatte wird gesehen, dass die Herstellung der Stützleiste mit der Vielzahl an Durchbrechungen sehr kostenaufwendig ist und zusätzlichen Abfall erzeugt, bei der Erstellung der Öffnungen.

Weiterhin nachteilig wird bei dieser Stützplatte gesehen, dass sich der auf der Stützleiste aufgebrachte und die Deckleiste haltende Klebstoff zwar in die Durchbrechungen der Stützleiste eindringt, aber die gewünschte Verankerung sowie die geforderte Abreißfestigkeit der Deckleiste nicht realisierbar sind. Bedingt auch durch die Auswahl der thermoplastischen Werkstoffe, die miteinander zu verbinden sind sowie der entsprechenden Klebstoffe erbringt die aus Durchbrechungen bestehende Perforation nicht die an sie gestellten Anforderungen. Die EP 1698738 A2 offenbart eine Leichtbauplatte mit zwei dünnwandigen Decklagen und mindestens einer zwischen den Decklagen angeordneten und mit dieser verbundenen Kernlage, wobei in wenigstens eine Längsstirnseite der Leichtbauplatte eine Nut einbringbar ist, das in die Nut eine erste Profilleiste einbringbar ist und das auf die erste Profilleiste eine zweite Profilleiste aufbringbar ist. Es wird weiterhin eine Leichtbauplatte offenbart mit zwei dünnwandigen Decklagen und mindestens einer zwischen den Decklagen angeordneten und mit dieser verbundenen Kernlage, wobei in wenigstens eine Längsstirnseite der Leichtbauplatte eine Nut einbringbar ist, dass in die Nut eine erste Profilleiste einbringbar ist, das die über die Nut der Leichtbauplatte überstehende erste Profilleiste abtragbar ist und das auf die erste Profilleiste eine zweite Profilleiste aufbringbar ist. Die Profilleisten bestehen dabei aus einem thermoplastisch verarbeitbarem Werkstoff. Dabei kann die erste Profilleiste eine Dichte von etwa 0,2 g/cm³ bis etwa 0,85 g/cm³, vorzugsweise 0,4 g/cm³ bis 0,7 g/ cm³ aufweisen, welche aber geringer, ist als die Dichte der zweiten Profilleiste. Hier setzt die Erfindung ein, die sich die Aufgabe gestellt hat, eine Leichtbauplatte bereitzustellen, welche sich die wirtschaftlich und kostengünstig herstellen bzw. montieren lässt, bei der die Deckleiste die gewünschten Anforderungen an die Abreißfestigkeit problemlos erfüllt und die optisch ohne Trennfuge und klebstofffrei fixierbar ist.

Erfindungsgemäß wird diese Aufgabe durch die Leichtbauplatte mit den Merkmalen des Anspruches 1 realisiert.

Weitere vorteilhafte Ausgestaltungen sind in den Unteransprüchen ausgeführt.

Die erfindungsgemäße Leichtbauplatte mit zumindest zwei Decklagen und zumindest eine zwischen den Decklagen angeordnete Kernlage, wobei eine Profilleiste an zumindest einer der Schmalseiten der Leichtbauplatte befestigbar ist, zeichnet sich dadurch aus, dass die Profilleiste eine Funktionsschicht aufweist, wobei die Funktionsschicht polare und/oder reaktive Gruppen im Molekülaufbau enthält, so dass die Profilleiste durch die Zufuhr von Energie durch beispielsweise Licht und/oder Strahlung mit den Schmalseiten der Leichtbauplatten aus unterschiedlichsten Werkstoffen verbunden werden kann und wobei die Profilleiste so an der Schmalseite der Leichtbauplatte fixiert ist, dass die Funktionsschicht nicht nur die Stirnseite der Decklage, sondern auch die rechtwinklig dazu angeordnete Unterseite der Decklage stoffschlüssig abstützend hintergreift.

Dadurch ist die Funktionsschicht durch Aufschmelzen stoffschlüssig an polaren und unpolaren Werkstoffen von Leichtbauplatten unmittelbar anbindbar.

Eine mechanische Adhäsion wird beispielsweise erreicht, in dem die Funktionsschicht in eine Zellstruktur der Decklage der Leichtbauplatte eindringt, diese umklammert und aushärtet. Eine spezifische Adhäsion wird durch verschiedene Effekte erreicht: Die Funktionsschicht mit polaren und/oder reaktive Gruppen als auch unpolaren Anteilen im Molekülaufbau zeigt eine gute Affinität zu Werkstoffen wie Holz, um ein Eindiffundieren zu erleichtern. Beispielsweise zeigen die in Holzwerkstoffen enthaltenen Cellulosen, die OH-Gruppen enthalten, sehr starken Dipolcharakter und damit Adhäsion zu polaren Stoffen.

Eine bevorzugte Ausführung der Erfindung betrifft eine Leichtbauplatte nach der vorangegangenen Ausführung, wobei die Profilleiste eine mit der Funktionsschicht verbundene Strukturschicht aufweist. Diese Maßnahme hat den Vorteil, dass die Strukturschicht der Profilleiste ungeachtet der Funktion der Funktionsschicht die eigentliche Struktur verleiht, wobei die Funktionsschicht und die Strukturschicht jeweils funktional ausgelegt werden können.

Es kann von Vorteil sein, wenn die Funktionsschicht polare und/oder reaktive Molekülgruppen aufweist, so dass adhäsive und/oder kovalente und/oder ionische Anbindungen erreichbar sind. Die besten Ergebnisse bei der Anbindung der Profilleiste an der erfindungsgemäßen Leichtbauplatte werden erzielt, wenn das Polymer der Funktionsschicht eine sehr gute Fließfähigkeit aufweist.

Derartige polare und/oder reaktive Gruppen können, z.B. durch entsprechende Copolymerisation und/oder Pfropfung und/oder nachträglicher Oberflächenbehandlung (Beflammen, Corona- oder Plasmaverfahren) einfach in den Molekülaufbau der Funktionsschicht eingebaut sein. Die reaktiven Gruppen können zusätzlich chemische Bindungen zwischen der Funktionsschicht und dem jeweiligen Verbindungspartner in der Leichtbauplatte bilden und dadurch für eine besonders hohe Verbindungsfestigkeit sorgen.

Es kann sich als hilfreich erweisen, wenn die Funktionsschicht Molekülgruppen basierend auf Carbonsäuren bzw. deren Ester oder Salze insbesondere Acrylsäure, Acrylsäureester, Metacrylsäure, Metacrylsäureester, Methylmetacrylsäureester; oder Epoxiden, Isocyanaten, Phenol-Formaldehydharzen, Silanen, Titanaten, Alkoholen, Amiden, Imiden, Ammoniumverbindungen oder Sulfonsäuren bzw. deren Ester oder Salze und dgl. aufweist. Vorzugsweise umfasst die Funktionsschicht eine oder mehrere der Molekülgruppen ausgewählt aus diesen Gruppen oder Mischungen daraus.

Es liegt jedoch auch im Rahmen der Erfindung, sogenannte geblockte Isocyanate und dgl. einzusetzen, die erst bei definierten Aktivierungstemperaturen ihre Reaktivität erreichen.

Eine weitere bevorzugte Ausführung der Erfindung betrifft eine Leichtbauplatte mit einer Profilleiste nach einer der vorangegangenen Ausführungen, wobei die Strukturschicht aus einem thermoplastischen Werkstoff, bevorzugt Polypropylen, Acrylnitril-Butadien-Styrol-Copolymerisat, Polyvinylchlorid, Polymethylmethacrylat, Polyethylenterephthalat, Polyethylen, Styrol-Ethylen-Butadien-Styrol-Blockcopolymer, Polyamid, Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. gefertigt ist. Diese Maßnahme hat den Vorteil, dass dieser Werkstoff kostengünstig verfügbar und gut verarbeitbar ist.

Eine weitere bevorzugte Ausführung der Erfindung betrifft eine Leichtbauplatte mit einer Profilleiste nach einer der vorangegangenen Ausführungen, wobei die Funktionsschicht auf einem thermoplastischen Werkstoff, bevorzugt Polypropylen, Acrylnitril-Butadien-Styrol-Copolymerisat, Polyvinylchlorid, Polymethylmethacrylat, Polyethylenterephthalat, Polyethylen, Styrol-Ethylen-Butadien-Styrol-Blockcopolymer, Polyamid,_Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. basiert. Diese Maßnahme hat den Vorteil, dass dieser Werkstoff kostengünstig verfügbar sowie gut verarbeitbar ist, und zudem einfach chemisch modifizierbar ist.

In einer weiter bevorzugten Ausführungsform ist die Funktionsschicht als thermoplastische Funktionsschicht ausgebildet, die es erstmals ermöglicht, eine Leichtbauplatte mit einer Profilleiste nach den vorher beschriebenen Ausführungsformen klebstofffrei, d.h. ohne unmittelbar vor dem Anfügen zusätzlich auf die der Schmalseite der Leichtbauplatte zugeordneten Seite der Profilleiste einen sogenannten Schmelzkleber aufzubringen sowie ohne eine sichtbare Fuge an einer Schmalseite einer Leichtbauplatte zu fixieren.

Eine weitere bevorzugte Ausführung der Erfindung betrifft eine Leichtbauplatte mit einer Profilleiste nach einer der vorangegangenen Ausführungen, wobei die Funktionsschicht auf dem Werkstoff basiert, aus welchem die Strukturschicht gefertigt ist. Diese Maßnahme hat den Vorteil, dass zwischen den Schichten der Profilleiste ein besonders fester Verbund entsteht.

Eine weitere bevorzugte Ausführung der Erfindung betrifft eine Profilleiste nach einer der vorgenannten Ausführungen, wobei die Funktionsschicht aus einem Blend, das aus mindestens einem der vorgenannten thermoplastischen Werkstoffe, mindestens aus einem weiteren Polymer, das die vorgenannten polaren und/oder reaktiven Molekülgruppen aufweist und Additiven besteht.

Eine weitere bevorzugte Ausführung der Erfindung betrifft eine Leichtbauplatte mit einer Profilleiste nach einer der vorangegangenen Ausführungen, wobei die Strukturschicht und die Funktionsschicht stoffschlüssig verbunden sind. Diese Maßnahme hat den Vorteil, dass die Schichten der Profilleiste besonders fest verbunden sind.

Eine weitere bevorzugte Ausführung der Erfindung betrifft eine Leichtbauplatte mit einer Profilleiste nach einer der vorangegangenen Ausführungen, wobei die Strukturschicht und die Funktionsschicht koextrudiert sind. Diese Maßnahme hat den Vorteil, dass sich die Formgebung der Profilleiste besonders einfach gestaltet. Die Erfindung betrifft eine Leichtbauplatte mit einer Profilleiste nach einer der vorangegangenen Ausführungen, wobei der Werkstoff der Funktionsschicht einen niedrigeren Schmelzpunkt aufweist als der Werkstoff der Strukturschicht. Diese Maßnahme hat den Vorteil, dass bei einer Erwärmung der Profilleiste auf eine Temperatur über dem Schmelzpunkt der Funktionsschicht, aber unter dem Schmelzpunkt der Strukturschicht, lediglich die Funktionsschicht (an)schmilzt und einen zähflüssigen bzw. zähplastischen Zustand erreicht, während die Strukturschicht ihren festen Zustand unverändert beibehält.

Eine weitere bevorzugte Ausführung der Erfindung betrifft eine Leichtbauplatte mit einer Profilleiste nach einer der vorangegangenen Ausführungen, wobei der Werkstoff der Funktionsschicht ein Copolymer, vorzugsweise ein Pfropfcopolymer, bevorzugt Maleinsäureanhydrid- gepfropftes Polypropylen ist. Diese Maßnahme hat den Vorteil, dass sich die Werkstoffzusammensetzung, insbesondere der Anteil polarer Gruppen im Molekülaufbau, und damit die Werkstoffeigenschaften gezielt einstellen lassen.

Eine weitere bevorzugte Ausführung der Erfindung betrifft eine Leichtbauplatte mit einer Profilleiste nach einer der vorangegangenen Ausführungen, wobei die Funktionsschicht Energie absorbierende Zusatzstoffe, vorzugsweise Licht und/oder Strahlung absorbierende Zusatzstoffe, bspw. Laserpigmente enthält. Diese Maßnahme hat den Vorteil, dass die Funktionsschicht gezielt mit Energie beaufschlagbar und über den Schmelzpunkt erwärmbar ist. Vorzugsweise sind die Energie absorbierenden Zusatzstoffe in bestimmten Abschnitten in der Funktionsschicht enthalten, die gezielt aufgeschmolzen werden, wobei diese Abschnitte in beliebigen Mustern angeordnet sein können, z.B. als parallele Linien entlang der längsrandseitigen Kanten der Profilleiste.

Eine weitere bevorzugte Ausführung der Erfindung betrifft eine Leichtbauplatte mit einer Profilleiste nach einer der vorangegangenen Ausführungen, wobei die Strukturschicht die Oberschicht der Profilleiste bildet, die eine Oberseite bzw. Sichtseite der Profilleiste definiert. Diese Maßnahme hat den Vorteil, dass das Erscheinungsbild der Profilleiste auch nach dem Aufschmelzen und Verschweißen der Funktionsschicht an einer Leichtbauplatte, z.B. einer Holzwerkstoffplatte (Spanplatte, MDF-Platte) an der Sichtseite unverändert erhalten bleibt.

Eine weitere bevorzugte Ausführung der Erfindung betrifft eine Leichtbauplatte mit einer Profilleiste nach einer der vorangegangenen Ausführungen, wobei die Oberseite der Profilleiste ein Dekor aufweist. Diese Maßnahme hat den Vorteil, dass die Profilleiste trotz eines im Wesentlichen identischen strukturellen Aufbaus unterschiedliche Dekorierungen aufweisen kann, z.B. eine auf eine Ablagefläche der Leichtbauplatte abgestimmte Dekorierung.

Eine weitere bevorzugte Ausführung der Erfindung betrifft eine Leichtbauplatte mit einer Profilleiste nach einer der vorangegangenen Ausführungen, wobei die Funktionsschicht die Unterschicht der Profilleiste bildet, die eine Unterseite bzw. Anlageseite der Profilleiste definiert. Diese Maßnahme hat den Vorteil, dass die Funktionsschicht unmittelbar mit einer zu verdeckenden Schmalseite einer Leichtbauplatte deren Decklagen bspw. aus Spanplatten bzw. MDF-Platten gebildet ist, verschweißbar ist.

In einer weiteren vorteilhaften Ausgestaltung der Erfindung weist die Funktionsschicht Zusatzstoffe auf, wie bspw. Farbstoffe, Pigmente und dgl., die zu einer vorteilhaften farblichen Übereinstimmung zwischen der Funktionsschicht und der Deckschicht, aber auch zur Oberseite der Leichtbauplatte führen. Die aus dem Stand der Technik bekannte, optisch sichtbare, Trennfuge zwischen der Profilleiste und der Leichbauplatte wird somit vermieden.

Eine weitere bevorzugte Ausführung der Erfindung betrifft eine Leichtbauplatte mit einer Profilleiste nach einer der vorangegangenen Ausführungen, wobei die Strukturschicht eine Dicke von 0,8 bis 5 mm, vorzugsweise 1,0 bis 3,0 mm aufweist. Diese Maßnahme hat den Vorteil, dass die Strukturschicht der Profilleiste eine ausreichend steife Struktur verleiht. Eine weitere bevorzugte Ausführung der Erfindung betrifft eine Leichtbauplatte mit einer Profilleiste nach einer der vorangegangenen Ausführungen, wobei die Funktionsschicht eine Dicke von 0,2 bis 5 mm, vorzugsweise 0,5 bis 2 mm aufweist. Diese Maßnahme hat den Vorteil, dass die Funktionsschicht nur in einer erforderlichen Dicke ausgeführt ist, um die Anbindung an die Leichtbauplatte zu bewerkstelligen. Dadurch wird der im Verhältnis zum Werkstoff der Strukturschicht teurere Werkstoff der Funktionsschicht eingespart.

Eine weitere bevorzugte Ausführung der Erfindung betrifft eine Leichtbauplatte mit einer Profilleiste nach einer der vorangegangenen Ausführungen, wobei die Funktionsschicht zumindest abschnittsweise mit einer Stirnseite der Decklage der Leichtbauplatte stoffschlüssig und/oder chemisch verbunden ist. Diese Maßnahme hat den Vorteil, dass die Funktionsschicht stoffschlüssig und/oder chemisch und ggf. auch formschlüssig mit der Leichtbauplatte verbunden ist. Durch die partielle Verschweißung, wonach die Funktionsschicht nur abschnittsweise mit einer Stirnseite der Decklagen der Leichtbauplatte verschweißt wird, die Schmalseite aber vollständig durch die Profilleiste verkleidet wird, ist die Funktionsschicht nur an ausgewählten Stellen mit Energie zu beaufschlagen, so dass Zeit und Energie eingespart werden. Die Bezeichnung "chemisch verbunden" bezeichnet eine chemische Bindung aufgrund einer chemischen Reaktion zwischen einer in der Funktionsschicht enthaltenen, reaktiven Molekülgruppe und einem entsprechenden Verbindungspartner bspw. einer Stirnseite oder einer Decklage der Leichtbauplatte. Die in der Funktionsschicht enthaltenen, reaktiven Molekülgruppen und der Verbindungspartner sind dabei nicht eingeschränkt, solange sie in der Lage sind, eine chemische Bildung miteinander eingehen zu können. Die chemische Bindung zwischen der Molekülgruppe in der Funktionsschicht und dem jeweiligen Verbindungspartner der Leichtbauplatte sorgt für eine besonders hohe Verbindungsfestigkeit.

Eine weitere bevorzugte Ausführung der Erfindung betrifft eine Leichtbauplatte nach der vorangegangenen Ausführung, wobei die Unterseite der Profilleiste vollflächig mit einer Stirnseite der Decklage der Leichtbauplatte stoffschlüssig und/oder chemisch verbunden ist. Diese Maßnahme hat den Vorteil, dass die Funktionsschicht sicher und dauerfest mit der Leichtbauplatte verbunden ist.

In einer weiteren vorteilhaften Ausführung der erfindungsgemäßen Profilleiste weist der Werkstoff der Funktionsschicht eine Härte von Shore A von maximal 90 auf, bevorzugt maximal 60. Hierdurch ist es vorteilhafterweise möglich, die erfindungsgemäße Profilleiste den Anforderungen an die Geometrie der Möbelstücke optimal anzupassen.

In einer weiteren vorteilhaften Ausgestaltungsform der erfindungsgemäßen Profilleiste weist die Funktionsschicht einen Elastizitätsmodul von maximal 200 MPa auf.

Eine weitere bevorzugte Ausführung der Erfindung betrifft eine Leichtbauplatte nach einer der vorangegangenen Ausführungen, wobei deren Werkstoff der Decklage ausgewählt ist aus der Gruppe der Holzwerkstoffe, der Holzersatzwerkstoffe, der Metalle, der Gläser, der Kunststoffe, der Steine, der Keramiken oder Kombinationen davon. Diese Maßnahme hat den Vorteil, dass hinsichtlich der Werkstoffauswahl größtmögliche Freiheiten bestehen. Holz enthält beispielsweise ca. 40 % Cellulose, ca. 25 % Holocellulose und ca. 30 % Lignin. Die Cellulose ist ein lineares Kettenmolekül (bis zu 8 µm lang) und ist insbesondere für die Zugfestigkeit des Holzes verantwortlich. Die Holocellulosen sind aus unterschiedlichen Zuckern aufgebaut, die Ketten sind wesentlich kürzer und weisen Seitengruppen und Verzweigungen auf. Die Holocellulosen sind durch kovalente Bindungen mit dem Lignin in der Zellwand verbunden. Insbesondere die Cellulosen weisen eine Vielzahl von OH-Gruppen auf, die für den inneren Zusammenhalt des Holzes erforderlich sind, aber auch für die äußere Anbindung der Funktionsschicht nutzbar sind. Diese OH-Gruppen sind besonders geeignet, eine chemische Bindung mit in der Funktionsschicht enthaltenen, reaktiven Molekülgruppen bilden.

Grundsätzlich sind alle Werkstoffe, die entsprechende reaktive Gruppen an der Oberfläche haben, die mit den Stirnseiten der Decklagen der Leichtbauplatte in Berührung kommen, für chemische Bindungen geeignet. Gegebenenfalls können die Werkstoffe zunächst oberflächenmodifiziert werden, falls eine chemische Bindung gewünscht ist und die Werkstoffe per se keine oder nicht ausreichend chemisch reaktive Verbindungspartner aufweisen. Eine weitere bevorzugte Ausführung der Erfindung betrifft eine Leichtbauplatte nach einer der vorangegangenen Ausführungen, wobei der Werkstoff der Strukturschicht ausgewählt ist aus der Gruppe der Holzwerkstoffe, der Holzersatzwerkstoffe, der Metalle, der Gläser, der Kunststoffe, der Steine, der Keramiken oder Kombinationen davon. Diese Maßnahme hat den Vorteil, dass hinsichtlich der Werkstoffauswahl der Strukturschicht größtmögliche Freiheiten bestehen.

Die Erfindung soll nun an diesen nicht einschränkenden Ausführungsbeispielen beschrieben werden.

Es zeigen:
- Fig. 1: perspektivische Ansicht einer erfindungsgemäßen Leichtbauplatte mit Profilleiste
- Fig. 2: Schnittdarstellung einer erfindungsgemäßen Leichtbauplatte mit Profilleiste
- Fig. 3:: Schematisch geschnittene Draufsicht einer erfindungsgemäßen Leichtbauplatte mit Profilleisten

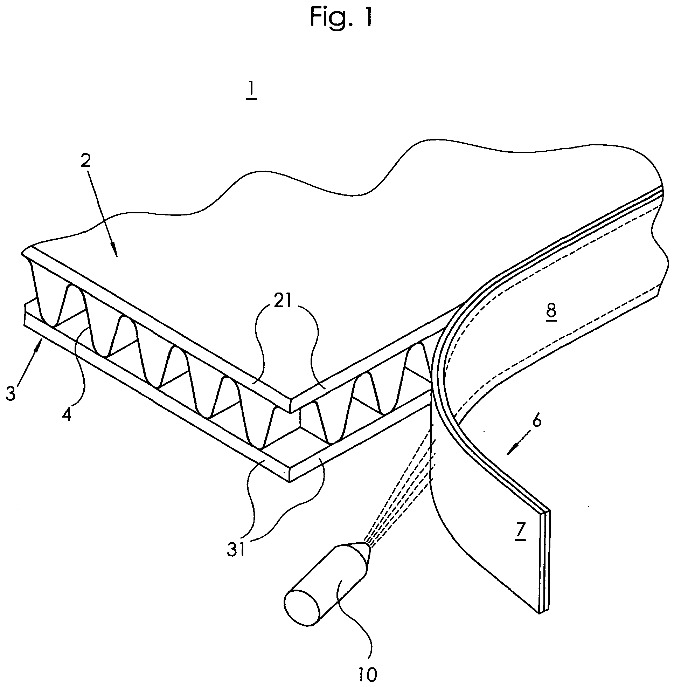

In der Fig. 1 ist eine perspektivische Ansicht einer Leichtbauplatte 1 dargestellt, mit zumindest zwei Decklagen 2, 3 und einer zwischen den Decklagen 2, 3 angeordneten Kernlage 4. An einer Schmalseite der Leichtbauplatte 1 ist eine Profilleiste 6 erkennbar, die zumindest teilweise mit der Schmalseite der Leichtbauplatte 1 verbunden ist.

Die Profilleiste 6 umfasst eine Funktionsschicht 7 und eine Strukturschicht 8. Die Funktionsschicht 7 ist aus einem Werkstoff gefertigt, der chemisch modifiziert ist, so dass dieser sowohl polare, unpolare als auch reaktive Gruppen im Molekülaufbau enthält.

In einer einfachen Variante umfasst die Profilleiste 6 ausschließlich die Funktionsschicht 7, d.h., die Profilleiste 6 ist ausschließlich aus dem chemisch modifizierten Werkstoff hergestellt, der sowohl polare, unpolare als auch reaktive Gruppen im Molekülaufbau enthält. Eine bevorzugte Profilleiste 6 umfasst eine Funktionsschicht 7 sowie eine Strukturschicht 8, wobei zwischen der Strukturschicht 8 und der Funktionsschicht 7 keine, eine oder mehrere zusätzliche Zwischenschichten vorgesehen sein können, so dass die Strukturschicht 8 und die Funktionsschicht 7 zumindest mittelbar, vorzugsweise unmittelbar verbunden sind. Die Strukturschicht 8 kann dabei weggelassen werden, wenn die Funktionsschicht 7 eine ausreichende Dicke aufweist, um der Profilleiste 6 die notwendige Steifigkeit zu verleihen.

Als Strukturschicht 8 im Sinne der Erfindung ist eine Schicht bezeichnet, die der Profilleiste 6 im Wesentlichen ihre Struktur verleiht. Die Strukturschicht 8 kann dabei aus einem thermoplastischen Werkstoff, bevorzugt Polypropylen, Acrylnitril-Butadien-Styrol-Copolymerisat, Polyvinylchlorid, Polymethylmethacrylat, Polyethylenterephthalat, Polyethylen, Styrol-Ethylen-Butadien-Styrol-Blockcopolymer, Polyamid, Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. gefertigt sein.

Die Strukturschicht 8 bildet in diesem Ausführungsbeispiel gleichzeitig die Oberschicht der Profilleiste 6. Alternativ sind über der Strukturschicht 8 ein oder mehrere Schichten angeordnet, beispielsweise eine Dekorschicht, eine Dekorfolie mit einer dekorierten Oberfläche und dergleichen. Die Strukturschicht 8 weist eine Dicke von 0,8 bis 5 mm, vorzugsweise 1,0 bis 3 mm auf.

Als Funktionsschicht 7 wird im Rahmen der Beschreibung eine Schicht bezeichnet, die aus einem schmelzfähigen Werkstoff besteht, der vorzugsweise bei Temperaturerhöhung auf über seinen Schmelzpunkt erweicht und einen zähflüssigen bzw. zähplastischen Zustand einnimmt und der bei Abkühlung wieder erstarrt und seine ursprüngliche Gestalt und Eigenschaften annimmt. Der Werkstoff der Funktionsschicht 7 ist derart chemisch modifiziert, dass er polare und/oder unpolare und/oder reaktive Molekülgruppen im Aufbau enthält. Durch Aufschmelzen ist der Werkstoff der Funktionsschicht 7 stoffschlüssig an polaren und unpolaren Werkstoffen unmittelbar anbindbar. Die Funktionsschicht 7 basiert vorzugsweise auf den gleichen Werkstoffen wie die Strukturschicht 8, bevorzugt auf einem thermoplastischen Werkstoff, bevorzugt Polypropylen, Acrylnitril-Butadien-Styrol-Copolymerisat, Polyvinylchlorid, Polymethylmethacrylat, Polyethylenterephthalat, Polyethylen, Styrol-Ethylen-Butadien-Styrol-Blockcopolymer, Polyamid, Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl.

Insbesondere ist der Werkstoff der Funktionsschicht 7 ein Copolymer, vorzugsweise ein Pfropfcopolymer, bevorzugt ein Maleinsäureanhydrid- gepfropftes Polypropylen.

Der Werkstoff der Funktionsschicht 7 enthält dabei einen Anteil von bis zu 4 % polare und/oder unpolare und/oder reaktive Gruppen im Molekülaufbau, vorzugsweise 0,5 bis 2 %. Die Funktionsschicht 7 weist eine Dicke von 0,2 bis 5 mm, vorzugsweise 0,5 bis 2 mm auf. Bevorzugt enthält die Funktionsschicht 7 ein oder mehrere der Molekülgruppen basierend auf Carbonsäuren bzw. deren Ester oder Salze insbesondere Acrylsäure, Acrylsäureester, Metacrylsäure, Metacrylsäureester, Methylmetacrylsäureester; oder Epoxiden, Isocyanaten, Phenol-Formaldehydharzen, Silanen, Titanaten, Alkoholen, Amiden, Imiden, Ammoniumverbindungen oder Sulfonsäuren bzw. deren Ester oder Salzen oder dgl.

Vorzugsweise umfasst die Funktionsschicht eine oder mehrere der Molekülgruppen ausgewählt aus diesen Gruppen oder Mischungen daraus.

Die Strukturschicht 8 und die Funktionsschicht 7 sind vorzugsweise stoffschlüssig verbunden, bevorzugt coextrudiert.

Der Werkstoff der Funktionsschicht 7 weist dabei vorzugsweise einen niedrigren Schmelzpunkt auf als der Werkstoff der Strukturschicht 8. Wird nun die Profilleiste 6 auf eine vorgegebene Temperatur erhitzt, die über dem Schmelzpunkt des Werkstoffes der Funktionsschicht 7, aber unter dem Schmelzpunkt der Strukturschicht 8 liegt, so wird nur der Werkstoff der Funktionsschicht 7 erweicht bzw. aufgeschmolzen.

In der Fig. 1 ist ein freies Ende der Profilleiste 6 bereits teilweise mit den Stirnseiten 21, 31 der Decklagen 2, 3 der Leichtbauplatte 1 stoffschlüssig verbunden.

Die Profilleiste 6 ist dabei so an der Schmalseite der Leichtbauplatte 1 fixiert, dass die Funktionsschicht 7 die Stirnseiten 21, 31 der Decklagen 2, 3 der Leichtbauplatte 1 abstützend hintergreift.

Die durch das Energiebeaufschlagungsmittel 10 auf über ihren Schmelzpunkt erwärmte Funktionsschicht 7 wird dabei im Bereich zwischen der Strukturschicht 8 und den Stirnseiten 21, 31 der Decklagen 2, 3 in ihrer Wandstärke soweit reduziert, dass zwischen der Kante der Leichtbauplatte 1 und der Strukturschicht 8 der Profilleiste 6 keine Trennfuge ist.

Die zwischen den Decklagen 2, 3 der Leichtbauplatte 1 positionierte Funktionsschicht 7 ist nach dem Abkühlen erstarrt und stützt so die beiden gegenüberliegenden Decklagen 2, 3 der Leichtbauplatte 1 fixierend ab.

Die Decklagen 2, 3 der Leichtbauplatte 1 sind dabei aus einem Holzwerkstoff, insbesondere einer Spanplatte, einer MDF-Platte und dergleichen hergestellt.

In diesem Ausführungsbeispiel ist die Strukturschicht 8 aus einem Polypropylen hergestellt und der Werkstoff der Funktionsschicht 7 ist ein Maleinsäureanhydrid-gepfropftes Polypropylen. Die Profilleiste 6 wird dabei in an sich bekannten herkömmlichen Verfahren an die zu verschließende Schmalseite der Leichtbauplatte 1 angefahren, wobei die Funktionsschicht 7 unmittelbar vor dem Anfahren der Profilleiste 6 durch das Energiebeaufschlagungsmittel 10 mit Energie beaufschlagt wird. Dadurch wird die Funktionsschicht 7 erwärmt.

Die Energie kann dabei in beliebiger Form, vorzugsweise in Form von Laserlicht, Heißluft, Mikrowellen, Ultraschall und dergleichen zugeführt sein, wobei ein vorzugsweise in der Funktionsschicht 7 enthaltendes Energieabsorptionsmittel (z. B. Laserpigmente), die durch das Energiebeaufschlagungsmittel 10 zugeführte Energie aufnimmt und die Funktionsschicht 7 über den Schmelzpunkt erwärmt.

Dabei ist es nicht erforderlich, dass die Funktionsschicht 7 vollständig aufgeschmolzen wird, sondern dass die Funktionsschicht 7 lediglich im oberen bzw. unteren Längsrandbereich aufgeschmolzen wird, so dass die Funktionsschicht 7 zumindest abschnittsweise einen zähflüssigen bzw. zähplastischen Zustand einnimmt und beim Andrücken der Profilleiste 6 an die Schmalseite der Leichtbauplatte 1 mechanisch in die vorzugsweise raue Oberflächenstruktur der Stirnseiten 21, 31 der Decklagen 2, 3 der Leichtbauplatte 1 eingreift. Durch die eingestellten chemischen Eigenschaften der Profilleiste 6 wird die Funktionsschicht 7 zusätzlich stoffschlüssig mit den Stirnseiten 21, 31 der Decklagen 2, 3 der Leichtbauplatte 1 verbunden.

Einer Funktionsschicht 7, die vorzugsweise reaktive Molekülgruppen aufweist, wird durch das Energiebeaufschlagungsmittel 10 vorzugsweise so viel Energie zugeführt, dass eine Aktivierungsenergie überschritten ist, um eine chemische Reaktion auszulösen und eine chemische Bindung zwischen der Funktionsschicht 7 und dem jeweiligen Verbindungspartner, hier bspw. den Stirnseiten 21, 31 sowie den Decklagen 2, 3 der Leichtbauplatte 1, zu bewerkstelligen.

Diese Aktivierungsenergie, um eine chemische Bindung der Funktionsschicht 7 und dem jeweiligen Verbindungspartner zu bewerkstelligen, wird unter anderem durch folgende Parameter beeinflusst:

| | |
|---|---|
| - Temperatur | - Anpresskraft |
| - Schichtdicke | - Fügespalt |
| - Aushärtezeit | - Substratoberfläche |
| - Strahlung (Laser, UV-Licht) | - Vorbehandlung. |
| - Umgebungsbedingungen (Feuchtigkeit, Sauerstoff) | |

Bei einer Funktionsschicht 7 aus einem Maleinsäureanhydrid- gepfropften Polypropylen (PP-MAH) wird die Funktionsschicht 7 beispielsweise auf eine Temperatur von > 135 °C erwärmt. Diese Temperatur ist in der Regel ausreichend, so dass das Maleinsäureanhydrid mit den OH-Gruppen des Holzes der Decklagen 2, 3 reagiert, um eine chemische Bindung zu bewerkstelligen.

Die Profilleiste 6 wird dabei im Übermaß gefertigt und derart an die Schmalseite der Leichtbauplatte 1 angefahren, dass beidseitig ein Überstandsbereich zwischen den gestrichelten Linien und den Rändern der Profilleiste 6 entsteht. Dieser Materialüberstand wird im Wege einer Span abhebenden Bearbeitung abgearbeitet, so dass die längsrandseitigen Kanten der Profilleiste 6 mit den der Decklagen 2, 3 der Leichtbauplatte 1 bündig verlaufen.

Es ist auch ausreichend, wenn die Funktionsschicht 7 zumindest abschnittsweise über das Energiebeaufschlagungsmittel 10 in dem Bereich über die Schmelztemperatur erwärmt wird, der direkt den Stirnseiten 21, 31 der Decklagen 2, 3 der Leichtbauplatte gegenüberliegt.

Ein weiterer Vorteil wird darin gesehen, dass insbesondere durch das Anpressen der Profilleiste 6 die Funktionsschicht 7 nicht nur die Stirnseiten 21, 31 der Decklagen 2, 3, sondern auch die rechtwinklig dazu angeordnete Unterseite der Decklagen 2, 3 stoffschlüssig abstützend hintergreift.

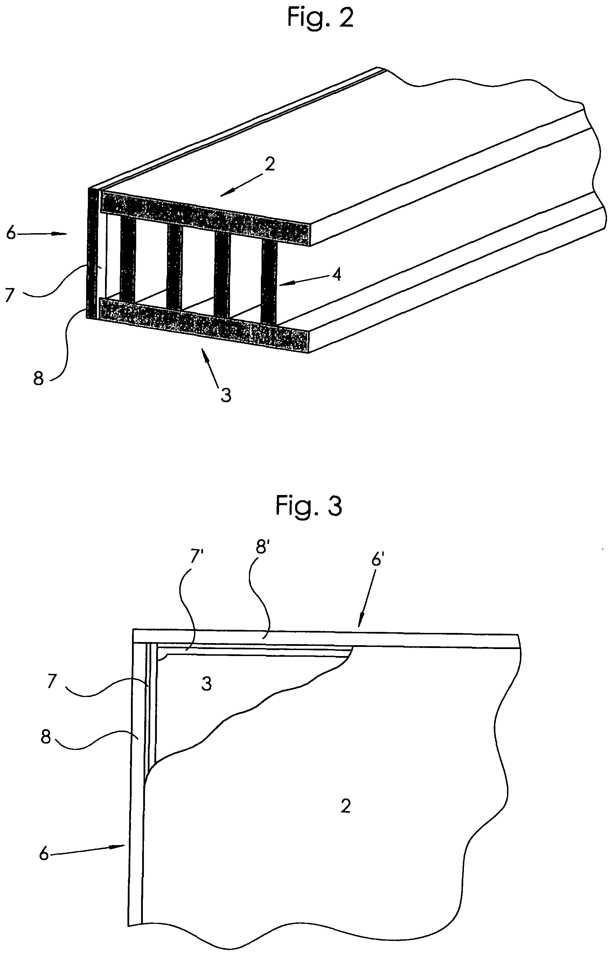

In der Fig. 2 ist eine weitere erfindungsgemäße Leichtbauplatte 1 dargestellt, mit zumindest zwei Decklagen 2, 3 und zumindest einer zwischen den Decklagen 2, 3 angeordneten Kernlage 4.

An einer Schmalseite der Leichtbauplatte 1 ist eine Profilleiste 6 angeordnet, die eine Funktionsschicht 7 und eine Strukturschicht 8 aufweist. Die Funktionsschicht 7 ist dabei mit der Strukturschicht 8 stoffschlüssig verbunden.

In der perspektivischen Schnittdarstellung ist erkennbar, dass die Funktionsschicht 7, welche vor dem Anfahren an die Schmalseite der Leichtbauplatte 1 eine Dicke von etwa 2,5 mm hatte, nun zumindest im Bereich der Stirnseiten 21, 31 der Decklagen 2, 3 der Leichtbauplatte 1 nur noch eine Wandstärke von etwa 0,1 mm aufweist.

Rechtwinklig zu den Stirnseiten 21, 31 der Decklagen 2, 3 der Leichtbauplatte 1 hat die Funktionsschicht 7 der Profilleiste 6 ihre ursprüngliche Dicke behalten und umgreift nun abstützend die rechtwinklig zur Stirnseite 21, 31 der Decklage 2, 3 der Leichtbauplatte 1 angeordneten Unterseiten der jeweiligen Decklage 2, 3 stoffschlüssig.

In einer Ausgestaltung der Erfindung ist es weiterhin vorteilhaft, dass die Funktionsschicht 7 mit der zwischen den Decklagen 2, 3 der Leichtbauplatte 1 angeordneten Kernlage 4 ebenfalls eine stoffschlüssige, abstützende Verbindung eingeht.

In Fig. 3 ist eine weitere erfindungsgemäße Leichtbauplatte 1 in einer Draufsicht dargestellt, wobei der Eckbereich in einer Schnittdarstellung vorliegt.

Die Leichtbauplatte 1 umfasst dabei eine Decklage 2 sowie eine darunter angeordnete Decklage 3, zwischen denen eine nicht dargestellte Kernlage 4 eingebracht ist.

An einer Schmalseite der Leichtbauplatte 1 ist eine erste Profilleiste 6 befestigt, welche eine stoffschlüssige Verbindung über die Funktionsschicht 7 insbesondere mit den Stirnseiten 21, 31 der Decklagen 2, 3 der Leichtbauplatte 1 über eine chemische Bindung eingegangen ist. Die erste Profilleiste 6 ist dabei bis an einen Eckbereich der Leichtbauplatte 1 angefügt.

An der in diesem Beispiel rechtwinklig angeordneten zweiten Schmalseite der Leichtbauplatte 1 ist eine zweite Profilleiste 6' befestigt. Die zweite Profilleiste 6' besteht dabei aus einer Strukturschicht 8' und einer Funktionsschicht 7', welche ebenfalls aus einem Polypropylen hergestellt sind, wobei die Funktionsschicht 7' ein Maleinsäureanhydrid- gepfropftes Polypropylen ist. Die zweite Profilleiste 6' ist wie die erste Profilleiste 6 stoffschlüssig mit der Schmalseite der Leichtbauplatte 1 fixiert.

Insbesondere im Eckbereich ist jedoch die zweite Profilleiste 6' über die ursprüngliche Kante der Leichtbauplatte 1 hinaus auf der Stirnseite der ersten Profilleiste 6 über die Funktionsschicht 7' fixiert. Die Funktionsschicht 7' der zweiten Profilleiste 6' hintergreift somit abstützend die erste Profilleiste 6 und ist mit dieser stoffschlüssig über die Funktionsschichten 7, 7' verbunden. Die Stirnseite der Strukturschicht 8 der ersten Profilleiste 6 ist über die Funktionsschicht 7' der zweiten Profilleiste 6' stoffschlüssig mit dieser verbunden.

Besonders bevorzugte Varianten der erfindungsgemäßen Leichtbauplatte 1 mit der Profilleiste 6 sind nachfolgend unter Angabe der dabei verwendeten Werkstoffe aufgeführt:

### Variante 1 (PP-Kante)

- Strukturschicht:: Polypropylen (PP);
- Funktionsschicht:: PP-Maleinsäureanhydrid

### Variante 2 (ABS-Kante)

- Strukturschicht:: Acrylnitril-Butadien-Styrol-Copolymerisat (ABS);
- Funktionsschicht:: Ethylenvinylacetat, Ethylenvinylacetat-Maleinsäureanhydrid, Ethylenmethacrylat, Polyurethan (thermoplastisch), ABS-Maleinsäureanhydrid oder Styrol-Ethylen-Butylen-Styrol-Blockcopolymer-Maleinsäureanhydrid, haftungsmodifiziertes Copolyamid;

### Variante 3 (PP-Kante)

- Struktur- und Funktionsschicht:: PP- Maleinsäureanhydrid gepfropft

## Patentansprüche

1. Leichtbauplatte mit zumindest zwei Decklagen (2,3) und zumindest eine zwischen den Decklagen (2,3) angeordnete Kernlage (4), wobei eine Profilleiste (6) an zumindest einer der Schmalseiten der Leichtbauplatte (1) befestigbar ist, wobei die Profilleiste (6) eine Funktionsschicht (7) und eine mit der Funktionsschicht (7) verbundene Strukturschicht (8) aufweist, wobei die Strukturschicht (8) und die Funktionsschicht (7) koextrudiert sind, **dadurch gekennzeichnet, dass** der Werkstoff der Funktionsschicht (7) derart chemisch modifiziert ist, dass er polare und/oder unpolare und/oder reaktive Gruppen im Molekülaufbau enthält, dass die Funktionsschicht (7) Energie absorbierende Zusatzstoffe enthält, wobei die Profilleiste (6) so an der Schmalseite der Leichtbauplatte (1) fixiert ist, dass die Funktionsschicht (7) nicht nur die Stirnseite (21, 31) der Decklagen (2, 3), sondern auch die rechtwinklig dazu angeordnete Unterseite der Decklagen (2, 3) stoffschlüssig abstützend hintergreift.

2. Leichtbauplatte nach Anspruch 1, **dadurch gekennzeichnet, dass** die Funktionsschicht (7) Molekülgruppen basierend auf Carbonsäuren bzw. deren Ester oder Salze insbesondere Acrylsäure, Acrylsäureester, Metacrylsäure, Metacrylsäureester, Methylmetacrylsäureester; oder Epoxiden, Isocyanaten, Phenol-Formaldehydharzen, Silanen, Titanaten, Alkoholen, Amiden, Imiden, Ammoniumverbindungen oder Sulfonsäuren bzw. deren Ester oder Salze oder sogenannte geblockte Isocyanate und dgl. oder Mischungen daraus aufweist.

3. Leichtbauplatte nach einem der vorangegangenen Ansprüche, **dadurch gekennzeichnet, dass** die Strukturschicht (8) aus einem thermoplastischen Werkstoff, vorzugsweise Kunststoff, bevorzugt Polypropylen, Acrylnitril-Butadien-Styrol-Copolymerisat, Polyvinylchlorid, Polymethylmethacrylat, Polyethylenterephthalat, Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. gefertigt ist.

4. Leichtbauplatte nach einem der vorangegangenen Ansprüche, **dadurch gekennzeichnet, dass** die Funktionsschicht (7) auf einem thermoplastische Polymer, bevorzugt Polypropylen, Acrylnitril-Butadien-Styrol-Copolymerisat, Polyvinylchlorid, Polymethylmethacrylat, Polyethylenterephthalat, Polyethylen, Polyamid, Thermoplastischem Elastomer auf Olefinbasis (TPO), Thermoplastischem Elastomer auf Urethanbasis (TPU), Thermoplastischem Copolyester (TPC), Styrol-Blockcopolymere (SBS, SEBS, SEPS, SEEPS und MBS), Thermoplastischem Copolyamid (TPA) und dgl. basiert.

5. Leichtbauplatte nach einem der vorangegangenen Ansprüche, **dadurch gekennzeichnet, dass** der Werkstoff der Funktionsschicht (7) einen niedrigeren Schmelzpunkt aufweist als der Werkstoff der Strukturschicht (8).

6. Leichtbauplatte nach einem der vorangegangenen Ansprüche, **dadurch gekennzeichnet, dass** die Funktionsschicht (7) vorzugsweise Licht und/oder Strahlung absorbierende Zusatzstoffe, bevorzugt Laserpigmente enthält.

7. Leichtbauplatte nach einem der vorangegangenen Ansprüche, **dadurch gekennzeichnet, dass** die Funktionsschicht (7) eine Dicke von 0,2 bis 5 mm, vorzugsweise 0,5 bis 2 mm aufweist.

8. Leichtbauplatte nach einem der vorangegangenen Ansprüche, **dadurch gekennzeichnet, dass** die Funktionsschicht (7) mit wenigstens einer Stirnseite (21, 31) der ersten Decklage (2, 3) und/oder der zweiten Decklage (2, 3) stoffschlüssig verbunden ist.

9. Leichtbauplatte nach einem der vorangegangenen Ansprüche, **dadurch gekennzeichnet, dass** die Funktionsschicht (7) eine Härte Shore A von maximal 90 aufweist, bevorzugt maximal 60.

10. Leichtbauplatte nach einem der vorangegangenen Ansprüche, **dadurch gekennzeichnet, dass** die Funktionsschicht (7) einen Elastizitätsmodul von maximal 200 MPa aufweist.

11. Leichtbauplatte nach einem der vorangegangenen Ansprüche, **dadurch gekennzeichnet, dass** an wenigstens einer Schmalseite eine erste Profilleiste (6) fixiert ist, die mit einem freien Ende am Eckbereich der Schmalseite der Leichtbauplatte endet, wobei die erste Profilleiste (6) über ihre Wanddicke von einer weiteren an einer winkelig zu dieser Schmalseite der Leichtbauplatte (1) befestigten zweiten Profilleiste (6') überdeckt ist und wobei die Funktionsschicht (7') der zweiten Profilleiste (6') die Funktionsschicht (7) der ersten Profilleiste (6) abstützend hintergreift.

## Claims

1. Lightweight construction board having at least two outer plies (2, 3) and at least one core ply (4) disposed between the outer plies (2, 3), where a profile strip (6) can be fastened to at least one of the narrow sides of the lightweight construction board (1), where the profile strip (6) has a functional layer (7) and a structural layer (8) joined to the functional layer (7), where the structural layer (8) and the functional layer (7) are coextruded, **characterized in that** the material of the functional layer (7) has been chemically modified such that it comprises polar and/or apolar and/or reactive groups in the molecular structure, **in that** the functional layer (7) comprises energy-absorbing additives, where the profile strip (6) is fixed on the narrow side of the lightweight construction board (1) in such a way that the functional layer (7) engages, integrally and supportingly, behind not only the end face (21, 31) of the outer plies (2, 3) but also the underside, disposed at right angles thereto, of the outer plies (2, 3).

2. Lightweight construction board according to Claim 1, **characterized in that** the functional layer (7) comprises molecular groups based on carboxylic acids and/or their esters or salts, more particularly acrylic acid, acrylic esters, methacrylic acid, methacrylic esters, methylmethacrylic esters; or epoxides, isocyanates, phenol-formaldehyde resins, silanes, titanates, alcohols, amides, imides, ammonium compounds or sulfonic acids and/or their esters or salts, or so-called blocked isocyanates and the like, or mixtures thereof.

3. Lightweight construction board according to either of the preceding claims, **characterized in that** the structural layer (8) is made of a thermoplastic material, preferably plastic, more preferably polypropylene, acrylonitrile-butadiene-styrene copolymer, polyvinyl chloride, polymethyl methacrylate, polyethylene terephthalate, thermoplastic elastomer based on olefin (TPO), thermoplastic elastomer based on urethane (TPU), thermoplastic copolyester (TPC), styrene block copolymers (SBS, SEBS, SEPS, SEEPS and MBS), thermoplastic copolyamide (TPA) and the like.

4. Lightweight construction board according to any of the preceding claims, **characterized in that** the functional layer (7) is based on a thermoplastic polymer, preferably polypropylene, acrylonitrile-butadiene-styrene copolymer, polyvinyl chloride, polymethyl methacrylate, polyethylene terephthalate, polyethylene, polyamide, thermoplastic elastomer based on olefin (TPO), thermoplastic elastomer based on urethane (TPU), thermoplastic copolyester (TPC), styrene block copolymers (SBS, SEBS, SEPS, SEEPS and MBS), thermoplastic copolyamide (TPA) and the like.

5. Lightweight construction board according to any of the preceding claims, **characterized in that** the material of the functional layer (7) has a lower melting point than the material of the structural layer (8).

6. Lightweight construction board according to any of the preceding claims, **characterized in that** the functional layer (7) preferably comprises light-absorbing and/or radiation-absorbing additives, more preferably laser pigments.

7. Lightweight construction board according to any of the preceding claims, **characterized in that** the functional layer (7) has a thickness of 0.2 to 5 mm, preferably 0.5 to 2 mm.

8. Lightweight construction board according to any of the preceding claims, **characterized in that** the functional layer (7) is joined integrally to at least one end face (21, 31) of the first outer ply (2, 3) and/or of the second outer ply (2, 3).

9. Lightweight construction board according to any of the preceding claims, **characterized in that** the functional layer (7) has a Shore A hardness of not more than 90, preferably not more than 60.

10. Lightweight construction board according to any of the preceding claims, **characterized in that** the functional layer (7) has a modulus of elasticity of not more than 200 MPa.

11. Lightweight construction board according to any of the preceding claims, **characterized in that** on at least one narrow side a first profile strip (6) is fixed which ends by a free end at the corner region of the narrow side of the lightweight construction board, where the first profile strip (6) is covered over its wall thickness by a further, second profile strip (6'), which is fastened on a at an angle to this narrow side of the lightweight construction board (1), and where the functional layer (7') of the second profile strip (6') engages supportingly behind the functional layer (7) of the first profile strip (6).

## Revendications

1. Panneau de construction léger comprenant au moins deux couches de surface (2, 3) et au moins une couche de noyau (4) agencée entre les couches de surface (2, 3), une bande profilée (6) pouvant être fixée sur au moins un des côtés étroits du panneau de construction léger (1), la bande profilée (6) comprenant une couche fonctionnelle (7) et une couche structurale (8) reliée avec la couche fonctionnelle (7), la couche structurale (8) et la couche fonctionnelle (7) étant co-extrudées, **caractérisé en ce que** le matériau de la couche fonctionnelle (7) est modifié chimiquement de manière à contenir des groupes polaires et/ou apolaires et/ou réactifs dans la structure moléculaire, **en ce que** la couche fonctionnelle (7) contient des additifs absorbant l'énergie, la bande profilée (6) étant fixée sur le côté étroit du panneau de construction léger (1) de sorte que la couche fonctionnelle (7) entre en prise par l'arrière en prenant appui par accouplement de matière avec non seulement le côté frontal (21, 31) des couches de surface (2, 3), mais également le côté inférieur des couches de surface (2, 3) agencé à angle droit par rapport à celui-ci.

2. Panneau de construction léger selon la revendication 1, **caractérisé en ce que** la couche fonctionnelle (7) comprend des groupes moléculaires à base d'acides carboxyliques ou leurs esters ou sels, notamment d'acide acrylique, d'ester de l'acide acrylique, d'acide méthacrylique, d'ester de l'acide méthacrylique, d'ester méthylique de l'acide méthacrylique ; ou d'époxydes, d'isocyanates, de résines de phénolformaldéhyde, de silanes, de titanates, d'alcools, d'amides, d'imides, de composés d'ammonium ou d'acides sulfoniques ou leurs esters ou sels, ou d'isocyanates dits bloqués et analogues, ou de mélanges de ceux-ci.

3. Panneau de construction léger selon l'une quelconque des revendications précédentes, **caractérisé en ce que** la couche structurale (8) est en un matériau thermoplastique, de préférence en plastique, avantageusement en polypropylène, en un copolymère d'acrylonitrile-butadiène-styrène, en polychlorure de vinyle, en polyméthacrylate de méthyle, en polyéthylène téréphtalate, en un élastomère thermoplastique à base d'oléfine (TPO), en un élastomère thermoplastique à base d'uréthane (TPU), en un copolyester thermoplastique (TPC), en copolymères séquencés de styrène (SBS, SEBS, SEPS, SEEPS et MBS), en un copolyamide thermoplastique (TPA) et analogues.

4. Panneau de construction léger selon l'une quelconque des revendications précédentes, **caractérisé en ce que** la couche fonctionnelle (7) est à base d'un polymère thermoplastique, de préférence de polypropylène, d'un copolymère d'acrylonitrilebutadiène-styrène, de polychlorure de vinyle, de polyméthacrylate de méthyle, de polyéthylène téréphtalate, de polyéthylène, de polyamide, d'un élastomère thermoplastique à base d'oléfine (TPO), d'un élastomère thermoplastique à base d'uréthane (TPU), d'un copolyester thermoplastique (TPC), de copolymères séquencés de styrène (SBS, SEBS, SEPS, SEEPS et MBS), d'un copolyamide thermoplastique (TPA) et analogues.

5. Panneau de construction léger selon l'une quelconque des revendications précédentes, **caractérisé en ce que** le matériau de la couche fonctionnelle (7) présente un point de fusion plus faible que le matériau de la couche structurale (8).

6. Panneau de construction léger selon l'une quelconque des revendications précédentes, **caractérisé en ce que** la couche fonctionnelle (7) contient de préférence des additifs absorbant la lumière et/ou un rayonnement, de préférence des pigments laser.

7. Panneau de construction léger selon l'une quelconque des revendications précédentes, **caractérisé en ce que** la couche fonctionnelle (7) présente une épaisseur de 0,2 à 5 mm, de préférence de 0,5 à 2 mm.

8. Panneau de construction léger selon l'une quelconque des revendications précédentes, **caractérisé en ce que** la couche fonctionnelle (7) est reliée par accouplement de matière avec au moins un côté frontal (21, 31) de la première couche de surface (2, 3) et/ou de la seconde couche de surface (2, 3).

9. Panneau de construction léger selon l'une quelconque des revendications précédentes, **caractérisé en ce que** la couche fonctionnelle (7) présente une dureté Shore A d'au plus 90, de préférence d'au plus 60.

10. Panneau de construction léger selon l'une quelconque des revendications précédentes, **caractérisé en ce que** la couche fonctionnelle (7) présente un module d'élasticité d'au plus 200 MPa.

11. Panneau de construction léger selon l'une quelconque des revendications précédentes, **caractérisé en ce qu'**une première bande profilée (6) est fixée sur au moins un côté étroit, et finit avec une extrémité libre dans la zone de coin du côté étroit du panneau de construction léger, la première bande profilée (6) étant recouverte sur son épaisseur de paroi par une autre, deuxième bande profilée (6') fixée sur un de manière inclinée par rapport à ce côté étroit du panneau de construction léger (1), et la couche fonctionnelle (7') de la deuxième bande profilée (6') entrant en prise par l'arrière en prenant appui avec la couche fonctionnelle (7) de la première bande profilée (6).
